# EUROPÄISCHE PATENTSCHRIFT

(11) **EP 3 130 058 B1**
(45) Veröffentlichungstag und Bekanntmachung des Hinweises auf die Patenterteilung: **16.06.2021**
(21) Anmeldenummer: 15709189.3
(22) Anmeldetag: 12.03.2015
(51) Int. Cl.: H02K 1/20, H02K 5/20, H02K 9/19

(54) **STATOR FÜR EINE ELEKTRISCHE MASCHINE UND ELEKTRISCHE MASCHINE**
STATOR FOR AN ELECTRIC MACHINE AND ELECTRIC MACHINE
STATOR POUR UNE MACHINE ÉLECTRIQUE ET MACHINE ÉLECTRIQUE

(30) Priorität: 09.04.2014 DE 102014206845
(43) Veröffentlichungstag der Anmeldung: 15.02.2017
(73) Patentinhaber: ZF Friedrichshafen AG, 88046 Friedrichshafen (DE)
(72) Erfinder: GEIDEL, Klaus, 97488 Stadtlauringen (DE); WEIDNER, Matthias, 97535 Wasserlosen (DE); SCHÄFLEIN, Alexander, 97199 Ochsenfurt (DE); CUDOK, Matthias, 98617 Ritschenhausen (DE)
(74) Vertreter: ZF Friedrichshafen AG
(86) Internationale Anmeldenummer: PCT/EP2015/055122
(87) Internationale Veröffentlichungsnummer: WO 2015/154936

(56) Entgegenhaltungen:
- EP-A2- 1 921 402
- US-A1- 2009 184 591
- US-A1- 2012 049 668
- US-A1- 2014 015 356

## Beschreibung

Vorliegende Erfindung betrifft einen Stator einer elektrischen Maschine, insbesondere für ein Hybrid- oder Elektrofahrzeug, mit einem im Wesentlichen zylindermantelförmigen sich axial erstreckenden Statorträger, wobei der Statorträger ein Blechpaket mit einer Vielzahl von im Wesentlichen ringförmig angeordneten Statorzähnen trägt und einen sich nach radial innen erstreckenden Schulterrand aufweist, der als axiale Abstützung für das Blechpaket dient.

Wie aus dem Stand der Technik bekannt, wird ein Stator der eingangs genannten Art, insbesondere für Elektromaschinen, wie beispielsweise Elektromotoren oder Generatoren, eingesetzt. Derartige Elektromotoren oder Generatoren weisen ein feststehendes Bauteil (Stator) und ein sich dem gegenüber drehendes Bauteil (Rotor) auf, wobei der Stator in der Regel fest an einem Gehäuse angeordnet ist. Derartige Elektromaschinen werden insbesondere bei Elektro- oder Hybridfahrzeugen eingesetzt, die hinsichtlich ihres Energieverbrauchs einen Vorteil gegenüber herkömmlichen Fahrzeugen aufweisen. Die in derartigen Elektro- oder Hybridfahrzeugen eingesetzten Elektromotoren bzw. Generatoren müssen jedoch hohe Leistungen und Drehmomente liefern, was eine hohe Abwärme durch ohmsche Verluste in den Statoren nach sich zieht. Damit diese Abwärme keine Beschädigungen hervorruft, ist üblicherweise am Stator mindestens ein Kühlsystem angeordnet, mit dem die Abwärme abtransportiert werden kann. Dabei unterscheidet man üblicherweise zwischen einer aktiven Kühlung, bei der ein Kühlmittel aktiv über zusätzliche Elemente an den Stator geführt wird, und passiven Kühlsystemen, in denen beispielsweise ein bereits für die Kupplung verwendetes Kühlmittel über Fliehkräfte nach außen an den Stator geführt wird.

Die DE10 2008 001 622 offenbart beispielsweise ein aktives Kühlsystem, bei dem Kühlmittel über Kühlmitteldüsen direkt an den Stator bzw. die Statorspulenwicklungen gespritzt wird. Ebenfalls ist bekannt, Kühlmittel durch extra am Stator ausgebildete Kühlmittelkanäle hindurchzuführen und so die Abwärme abzutransportieren, wie beispielsweise in der DE10 2011 103 336 offenbart. Bei passiven Kühlsystemen wird, wie oben erwähnt, Kühlmittel, das beispielsweise auch zur Kühlung einer innenlaufenden Kupplung oder eines Rotors verwendet und über Fliehkräfte nach außen getragen wird, auch zur Kühlung des Stators verwendet.

Bei beiden Systemen trifft das Kühlmittel, nachdem es den Stator passiert hat, üblicherweise auf die Gehäusewand und rinnt an dieser hinab zu einer Kühlmittelwanne. Durch das Aufprallen des Kühlmittels gegen die Wände des Gehäuses wird zudem das Kühlmittel entschäumt, so dass das Kühlmittel problemlos in die Kühlmittelwanne ablaufen kann.

Nachteilig bei den zuvor erläuterten Kühlmittelsystemen ist jedoch, dass insbesondere im Bereich der Kühlmittelwanne oftmals eine nicht ausreichende Kühlmittelabfuhr auftritt, da mehr Kühlmittel in die Kühlmittelwanne gelangt als abgeführt wird. Es ist zwar aus dem Stand der Technik eine Überlauföffnung bekannt, die einen Kühlmittelüberschuss abführen kann, diese ist jedoch nicht dazu ausgelegt, eine permanente Kühlmittelabfuhr bereitzustellen. Zudem ist eine insgesamte Erhöhung des Kühlmitteldurchsatzes im gesamten System, um beispielsweise Belastungsmaxima ausgleichen zu können, nicht möglich.

Mit der gattungsbildenden EP 1 921 402 A2 ist eine elektrische Maschine mit einem Statorblechpaket bekannt geworden, welches an einer zylindrischen Innenumfangsfläche eines Statorträgers angeordnet ist und wobei bezüglich einer Einbaulage der elektrischen Maschine in einem unteren Bereich dieser Umfangsfläche am Statorträger eine axial über die gesamte Erstreckung des Statorträgers verlaufende Kühlmittelpassage ausgebildet ist mit der ein kondensiertes und im Ausgangszustand dampfförmiges Kühlmittel zu einer an einer Axialseite des Stators befindlichen Kühlmittelablauföffnung transportiert werden kann. Der Statorträger ist mit der an der zylindrischen Innenumfangsfläche vorgesehenen Kühlmittelpassage als ein Gussteil ausgebildet, wodurch dessen Herstellung vergleichsweise arbeitsaufwändig und kostenintensiv ist.

Weiter offenbart die US 2012/0049668 A1 eine fluidgekühlte elektrische Maschine in Innenläuferbauweise. Zwischen einer Außenumfangsfläche des Stators und einer Innenumfangsfläche eines Statorträgers bzw. Gehäuses ist dabei ein Zwischenraum vorgesehen, welcher einen in Umfangsrichtung verlaufenden Kühlkanal ausbildet, der in Einbaulage in einem oberen Bereich einen Einlass und im unteren Bereich radiale Auslässe aufweist, durch welche das Kühlfluid in einen unterhalb der Maschine angeordneten Kühlmittelsumpf eintreten kann.

Die US 2009/0184591 A1 beschreibt eine elektrische Maschine für ein Hybridfahrzeug, wobei die elektrische Maschine eine Sprühölkühlung aufweist, mit der eine Statorwicklung in einer Einbaulage von oben mit einem Öl besprüht werden kann und wobei das Öl an einer Verschaltungsseite des Stators in einem zwischen einem Statorträger und einer Verschaltungseinrichtung ausgebildeten Axialspalt eintreten kann. Das Kühlmittel kann sich beim Ablaufen am Stator in einem im unteren Bereich der Maschine befindlichen Kühlmittelsumpf sammeln und jeweils axialseitig des Stators durch am Gehäuse vorgesehene Ablauföffnungen in eine Kühlmittelpumpe eintreten und somit der weiteren Zirkulation zugeführt werden.

Aufgabe vorliegender Erfindung ist es deshalb, bei einem gattungsgemäßen Stator einer elektrischen Maschine mit einfachen Mitteln einen die Axialseiten verbindenden Fluidkanal zu schaffen, der zur Ermöglichung einer effektive Kühlung einen hohen Durchsatz von Kühlmittel ermöglicht.

Diese Aufgabe wird durch einen erfindungsgemäßen Stator gemäß Patentanspruch 1, sowie eine erfindungsgemäße elektrische Maschine gemäß Patentanspruch 9 gelöst.

Erfindungsgemäß wird ein Stator einer elektrischen Maschine, insbesondere für ein Hybrid- oder Elektrofahrzeug mit einem im Wesentlichen zylindermantelförmigen sich axial erstreckenden Statorträger bereitgestellt, wobei der Statorträger ein Blechpaket mit einer Vielzahl von im Wesentlichen ringförmig angeordneten Statorzähnen trägt und einen sich nach radial innen erstreckenden Schulterrand aufweist, der als axiale Abstützung für das Blechpaket dient. Dabei ist in einem unteren Bereich des Stators zwischen dem Statorträger und dem Blechpaket ein sich axial erstreckender Fluidkanal ausgebildet, um Kühlmittel von einer axialen Seite des Stators auf die andere axiale Seite des Stators zu transportieren und wobei im Bereich des Fluidkanals an dem Schulterrand des Statorträgers mindestens eine Aussparung vorgesehen ist. Weiter weist der Statorträger zumindest im Bereich der Aussparung einen bezüglich des Blechpakets axial außen angeordneten, sich zumindest teilweise nach radial außen erstreckenden Ablaufkanal auf, der in fluidischem Kontakt mit der Aussparung ausgebildet ist. Da sich der Stator üblicherweise axial bis an die nächsten Bauelemente erstreckt, kann Kühlmittel seitlich am Stator nur schlecht in Richtung einer Kühlmittelablaufstelle aus der elektrischen Maschine bzw. dem Stator fließen. Zwar ermöglichen die hier vorgeschlagenen Aussparungen in dem Schulterrand des Statorträgers einen guten Kühlmitteldurchsatz durch den Stator, axial außerhalb des Statorträgers kann jedoch der Ablaufkanal zudem dafür sorgen, dass ausreichend Kühlmittel vom Stator nach radial außen ablaufen kann. Dabei kann sich der Ablaufkanal rings um den Stator erstrecken, es ist jedoch auch möglich, dass der Ablaufkanal nur in einem unteren Bereich des Stators in der Nähe der Kühlmittelablaufstelle angeordnet ist.

Gemäß einem weiteren vorteilhaften Ausführungsbeispiel kann dabei das Blechpaket als einzelne im Wesentlichen ringförmig angeordnete Statorsegmente ausgebildet sein, wobei an jedem Statorsegment ein oder mehrere Statorzähne ausgebildet sind, oder das Blechpaket kann auch als integrales Bauteil ausgebildet sein. Dabei ist insbesondere vorteilhaft, wenn an mindestens einem Statorzahn mindestens eine im Wesentlichen axial verlaufende Nut angeordnet ist. Insbesondere bei der Ausbildung des Blechpakets aus Segmenten ist diese Nut bereits am Statorzahn vorhanden. Mittels ihr wird eine Federwirkung für den Statorzahn bereitgestellt, die nötig ist, um die Segmente zu einem im Wesentlichen ringförmigen Paket anzuordnen, ohne dass sie sich gegeneinander verhaken. Ist jedoch das Blechpaket zusammengebaut, kommt dieser Nut im Stand der Technik keine weitere Aufgabe zu. Es wird vorgeschlagen, diese Nut vorteilhafterweise als Kühlmittelführung zu verwenden, um Kühlmittel von einer axialen Seite des Stators auf die andere axiale Seite des Stators zu transportieren. Gleichzeitig ist auch bei integralen Blechpaketen eine derartige Nut einfach einzubringen.

Im Rahmen der gesamten vorliegenden Beschreibung soll der Begriff "unten" als eine geodätische Angabe verstanden werden. In einem Einbauzustand der elektrischen Maschine ist damit ein Bereich um die 6-Uhr-Position gemeint. Da üblicherweise Kühlmittel insbesondere im Bereich der Kühlmittelwanne im unteren Bereich des Stators aus dem Stator abgeführt wird, gleichzeitig aber hier auch die baubaulichen Gegebenheiten eine ausreichende Kühlmittelabfuhr verhindern, ermöglichen die vorgeschlagenen Ausgestaltungen eine gezielte und ausreichende Abführung von Kühlmittel aus dem Statorbereich. Ist dagegen die Kühlmittelabfuhr nicht ausreichend dimensioniert, entstehen zum einen Temperaturunterschiede in der Kühlmittelwanne und zum anderen kann nicht ausreichend viel Kühlmittel durchgesetzt werden, um die entstehende Abwärme abzuführen. Zwar kann eine Überlauföffnung im unteren Bereich des Stators vorhanden sein, diese ist jedoch üblicherweise derart angeordnet, dass der Rotor bereits zu sehr in das Kühlmittel eintaucht und dadurch es aufgrund eines zu hohen Kühlmittelpegels zu einem Kühlmittelpanschen - also zu einem zu tiefen Eintauchen des Rotors in das Kühlmittel - kommt, was wiederum Schleppverluste bedingt. Eine ausreichende Kühlmittelabführung im unteren Bereich des Stators dagegen sorgt für einen größeren Kühlmitteldurchsatz ohne Schleppverluste, so dass eine effektivere Kühlung für den Stator und auch die elektrische Maschine bereitsteht.

Weiterhin kann vorteilhaft sein, wenn der Statorträger in seinem unteren Bereich an seinem radial äußeren Rand eine Ablauföffnung aufweist, durch die Kühlmittel aus der elektrischen Maschine in Richtung einer im Gehäuse angeordneten Kühlmittelsammelstelle geleitet werden kann. Von dieser Kühlmittelsammelstelle wiederum kann Kühlmittel in ein Kühlmittelreservoir abgeführt werden, in dem es gekühlt und aus dem es dem Kühlmittelkreislauf wieder zugeführt wird. Vorteilhafterweise ist dabei die Ablauföffnung im Statorträger derart dimensioniert, dass ausreichend Kühlmittel aus der elektrischen Maschine abführbar ist.

Gemäß einem weiteren vorteilhaften Ausführungsbeispiel ist der Ablaufkanal einerseits mit zumindest einer der Aussparungen an dem Schulterrand des Statorträgers und andererseits mit der Ablauföffnung am radial äußeren unteren Rand des Statorträgers fluidisch verbunden. Dadurch kann sichergestellt werden, dass Kühlmittel, das durch den Stator strömt, in ausreichender Menge aus dem Stator abgeführt werden kann, ohne dass angrenzende Bauteile den Kühlmittelstrom stauen würden.

Gemäß einem weiteren vorteilhaften Ausführungsbeispiel ist an dem Stator weiterhin eine Schaltringaufnahme angeordnet, die radial außen im Bereich des Schulterrands des Statorträgers mindestens einen vom Stator nach axial außen versetzten Teilbereich aufweist, wobei vorzugsweise der Teilbereich als Einkerbung ausgebildet ist. Da insbesondere im Bereich der Schaltringaufnahme Stator und Schaltringaufnahme aneinander anstoßend angeordnet sind, kann zwischen ihnen nur sehr begrenzt eine Kühlmitteldurchführung stattfinden. Die an der Schaltringaufnahme ausgebildete Einkerbung bzw. der nach axial außen versetzte Teilbereich gewährleistet dabei, dass Kühlmittel aus dem Stator nach radial außen abgeführt werden kann. Dabei ist insbesondere bevorzugt, wenn der nach axial außen versetzte Teilbereich im Bereich der im Wesentlichen axial verlaufenden Nut des Statorzahns angeordnet ist. Da ein großer Teil des Kühlmittels über die axial verlaufende Nut und über die Aussparung im Schulterrand des Statorträgers abgeführt wird, ist es besonders vorteilhaft, wenn auch der zurückversetzte Teilbereich in diesem Bereich angeordnet ist.

Alternativ oder zusätzlich ist es aber auch möglich, die gesamte radial äußerste Schaltringaufnahmetasche der Schaltringaufnahme nach axial außen versetzt angeordnet auszubilden, so dass rings um den Stator zwischen Stator und Schaltringaufnahme ein Kühlmittelabflussspalt ausgebildet ist.

Gemäß einem weiteren vorteilhaften Ausführungsbeispiel kann zur axialen Sicherung des Blechpakets an der dem Schulterrand abgewandten Seite des Statorträgers ein Sicherungsring vorgesehen sein, der mindestens eine Öffnung aufweist, die im Bereich der im Wesentlichen axial angeordneten Nut des Statorzahns angeordnet ist. Üblicherweise ist für die Befestigung des Blechpakets am Statorträger auch an der anderen Seite eine axiale Abstützung nötig, die montagebedingt meist über einen Sicherungsring erfolgt, der verstemmt das Blechpaket am Statorträger sichert. Um dennoch einen Kühlmittelaustausch durch den Stator zu ermöglichen, ist es vorteilhaft, wenn im Sicherungsring mindestens eine Öffnung ausgebildet ist, durch die Kühlmittel in die am Statorzahn angeordnete Nut strömen kann und von dort aus in Richtung des Kühlmittelablaufs geführt werden kann.

Der über die diversen Kanäle und Öffnungen ermöglichte Kühlmittelstrom kann dabei über die Größe der Öffnungen, die Tiefe der Nuten und/oder die Größe und Tiefe der Aussparung definiert werden. Dabei ist insbesondere vorteilhaft, dass zum einfachen Regulieren der Kühlmittelmenge auch nur einfach der Sicherungsring ausgetauscht werden kann, ohne dass weitere Bauteile an den veränderten Kühlmittelstrom angepasst werden müssen.

Ein weiterer Aspekt vorliegender Erfindung betrifft eine elektrische Maschine, insbesondere für ein Hybridfahrzeug oder ein Elektrofahrzeug, mit mindestens einem Stator und einem Rotor, die in einem Gehäuse aufgenommen sind. Dabei weist der Stator einen im Wesentlichen zylindermantelförmigen sich axial erstreckenden Statorträger auf, der ein Blechpaket mit einer Vielzahl von im Wesentlichen ringförmig angeordneten Statorzähnen trägt und der drehfest mit dem Gehäuse verbunden ist. Dabei ist der Stator wie oben beschrieben ausgebildet.

Weiterhin ist bevorzugt, wenn in einem unteren Bereich des Gehäuses eine Sumpfwanne für ein Kühlmittel ausgebildet ist, in der ein Kühlmittel aufgenommen ist, und der Stator, vorzugsweise in seinem unteren Bereich, zumindest teilweise von dem in der Sumpfwanne aufgenommenen Kühlmittel umgeben ist. Diese vorteilhafte Ausbildung einer Sumpfwanne im unteren Bereich des Gehäuses ermöglicht zum einen eine effektive Kühlung des Stators und zum anderen kann bei entsprechendem Kühlmittelpegel Kühlmittel über die Rotation des Rotors, der in seinem unteren Bereich Kühlmittel aus der Kühlmittelwanne aufnimmt, in der elektrischen Maschine und insbesondere am Stator verteilt werden, wodurch für eine effektive Abfuhr der Abwärme gesorgt ist.

Gemäß einem weiteren vorteilhaften Ausführungsbeispiel ist die Aussparung im Schulterrand des Statorträgers und/oder die im Wesentlichen axial angeordnete Nut des Statorzahns und/oder der axial nach außen versetzte Teilbereich der Schaltringaufnahme im Bereich der Sumpfwanne ausgebildet. Insbesondere im unteren Bereich, also im Bereich der Sumpfwanne, hat sich bei den aus dem Stand der Technik bekannten elektrischen Maschinen mit Kühlung gezeigt, dass hier eine mangelhafte Kühlmittelabführung stattfindet, da sich das Kühlmittel zwischen dem Stator und den angrenzenden Bauteilen, wie beispielsweise der Schaltringaufnahme oder einem angrenzenden Gehäuse, staut. Zum anderen kann Kühlmittel, das sich auf der der Kühlmittelablaufstelle abgewandten Seite im Kühlmittelsumpf befindet, nur über den Spalt zwischen Rotor und Stator in Richtung Kühlmittelablaufstelle geführt werden, was zu einer Temperaturungleichverteilung im Kühlmittel in der Sumpfwanne führt. Durch die erläuterte Ausgestaltung ist eine verbesserte Kühlmittelabfuhr möglich, so dass zum einen der Kühlmitteldurchsatz in der elektrischen Maschine erhöht werden kann und zum anderen Temperaturungleichverteilungen in der Sumpfwanne verhindert werden können.

Gemäß einem weiteren vorteilhaften Ausführungsbeispiel ist die Aussparung im Schulterrand des Statorträgers, die im Wesentlichen axial angeordnete Nut des Statorzahns und optional die Öffnung im Sicherungsring derart ausgebildet, dass sie einen fluidischen Verbindungskanal für das Kühlmittel durch den Stator bereitstellen. Dadurch können auch im Bereich des Kühlmittelsumpfes Stauungen aufgrund von mangelnden Strömungsmöglichkeit verhindert und gleichzeitig eine effektive Kühlung des Stators bereitgestellt werden.

Dabei kann vorteilhafterweise insbesondere über die Öffnung im Sicherungsring eine Durchflussmenge des Kühlmittels durch den Stator definiert werden. Da für eine Veränderung der Durchflussmenge lediglich der Sicherungsring ausgetauscht werden muss, ist eine sehr einfache Anpassung an veränderte Durchflussmengen möglich.

Weiterhin ist vorteilhaft, wenn an dem Gehäuse, insbesondere im Bereich des Blechpakets und/oder des Spaltes zwischen Rotor und Stator mindestens eine Kühlmitteleintragsstelle, insbesondere eine Kühlmittelsprühdüse, vorgesehen ist, die Kühlmittel an eine am Statorzahn angeordnete Spule und/oder in einen zwischen dem Stator und dem Rotor der elektrischen Maschine ausgebildeten Spalt einbringt. Eine derartige Kühlmitteleintragsstelle sorgt für eine besonders gute und effektive Kühlung an dem Stator zusätzlich oder alternativ zu dem über die Fliehkraft des Rotors eingeschleuderten Kühlmittels.

Gemäß einem weiteren vorteilhaften Ausführungsbeispiel ist an einer tiefsten Stelle des Gehäuses ein Kühlmittelauslass vorgesehen, der vorzugsweise mit der Ablauföffnung am Statorträger in fluidischem Kontakt steht. Dadurch kann Kühlmittel effizient aus der elektrischen Maschine abgeführt werden und einem Reservoir zugeleitet werden, in dem es gekühlt und aus dem es dem Kühlmittelkreislauf wieder zugeführt wird.

Weitere Vorteile und vorteilhafte Ausführungsformen sind in den Unteransprüchen, den Zeichnungen und der Beschreibung definiert.

Im Folgenden soll die Erfindung anhand von in den Zeichnungen dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.

Es zeigen:
- Fig. 1:: eine schematische Schnittansicht durch ein bevorzugtes Ausführungsbeispiel einer elektrischen Maschine;
- Fig. 2:: eine schematische räumliche Teilansicht eines Schnitts durch ein bevorzugtes Ausführungsbeispiel des Stators;
- Fig. 3:: eine schematische räumliche Teilansicht auf ein bevorzugtes Ausführungsbeispiel des Statorträgers;
- Fig. 4:: eine schematische räumliche Teilansicht auf einen Teilbereich eines bevorzugten Ausführungsbeispiels der Schaltringaufnahme;
- Fig. 5:: eine axiale Aufsicht auf einen Teilbereich des Stators von Seite der Schaltringaufnahme; und
- Fig. 6:: eine axiale Aufsicht auf einen Teilbereich des Stators von der der Schaltringaufnahme abgewandten axialen Seite des Stators.

Im Folgenden werden gleiche oder funktionell gleichwirkende Elemente mit denselben Bezugszeichen gekennzeichnet.

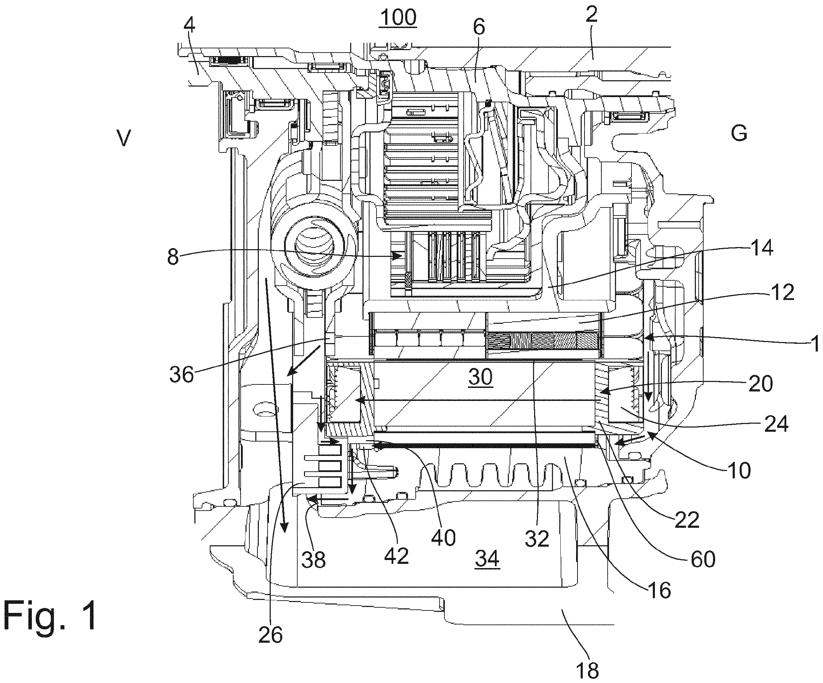

Fig. 1 zeigt eine schematische Schnittansicht durch ein Hybridmodul 100. Derartige Hybridmodule 100 werden in Hybridfahrzeugen eingesetzt, bei denen neben einer Verbrennungsmaschine (nicht dargestellt) eine elektrische Maschine 1 zum Antrieb verwendet wird. Um den Betrieb mittels der Verbrennungsmaschine allein, in Kombination mit der elektrischen Maschine 1, oder mit der elektrischen Maschine 1 allein zu ermöglichen, wird eine Getriebeeingangswelle 2 wahlweise mit einer Motorabtriebswelle 4 mittels einer Kupplungsvorrichtung 8 verbunden. Dabei ist eine Rotornabe 6 üblicherweise drehfest mit der Getriebeeingangswelle 2 verbunden, so dass bei geöffneter Kupplung 8 ein Drehmoment von der elektrischen Maschine 1 auf die Getriebeeingangswelle 2 übertragbar ist.

Dazu weist die elektrische Maschine 1 in bekannter Weise einen Stator 10 und einen Rotor 12 auf, wobei der Rotor 12 wiederum über einen Rotorträger 14 drehfest mit der Rotornabe 6 verbunden ist. Der Stator 10 selbst weist einen Statorträger 16 auf, der drehfest mit einem Gehäuse 18 verbunden ist und gleichzeitig ein Blechpaket 20 trägt, das ebenfalls in bekannter Weise eine Vielzahl von Statorzähnen 22 aufweist, an denen die Statorspulen 24 angeordnet sind. Zur Bestromung des Stators 10 ist weiterhin axial neben dem Stator 10, in dem hier dargestellten Ausführungsbeispiel verbrennungsmotorseitig, eine Schaltringaufnahme 26 angeordnet, die den Stator 10 bestromt und den Rotor 12 antreibt.

Da zum Antrieb eines Fahrzeugs viel Energie aufgewandt werden muss, entsteht auch beim Betrieb der elektrischen Maschine 1 eine große Abwärme, die mittels einer Kühlung abgeführt werden muss. Dazu ist, wie weiterhin Fig. 1 zeigt, in einem unteren Bereich der elektrischen Maschine ein Kühlmittelsumpf 30 angeordnet, der einen unteren Bereich des Stators 10 und auch einen Teil des Rotors 12 mit Kühlmittel bedeckt. Dadurch kann der Rotor 12 bei Rotation Kühlmittel aus dem Kühlmittelsumpf 30 mitnehmen und aufgrund von Fliehkraft im gesamten Innenraum verteilen. Gleichzeitig kann, insbesondere wenn Öl als Kühlmittel zum Einsatz kommt, das zum Betrieb der Kupplungsvorrichtung 8 verwendete Öl ebenfalls durch Fliehkräfte an den Rotor und von dort aus weiter an den Stator 10 geführt werden. Neben diesen passiven Kühleinrichtungen kann weiterhin eine hier nicht dargestellte Kühlmitteleintragsstelle im Bereich der Statorspulen 24, angeordnet sein, die dazu ausgelegt ist, Kühlmittel direkt auf die Statorspulen 24 und/oder in einen zwischen Rotor 12 und Stator 10 angeordneten Luftspalt 32 zu spritzen. Das von dem Rotor 12, der Kupplung 8 und/oder den Kühlmittel-eintragsstellen im Innenraum verteilte Kühlmittel prallt gegen das Gehäuse 18, fließt dann die Gehäusewände entlang und sammelt sich im Kühlmittelsumpf 30, um von dort aus in einen Kühlmittelsammelraum 34 abgeleitet zu werden. Aus dem Kühlmittelsammelraum 34 kann das Kühlmittel wiederum einem Kühlmittelreservoir (nicht dargestellt) zugeführt werden, in dem es gekühlt und aus dem es in den Kühlmittelkreislauf, also beispielsweise der Kupplung oder den Kühlmitteleintragsstellen, zurückgeführt wird.

Damit ein ausreichend großer Durchsatz von Kühlmittel durch die elektrische Maschine 1 möglich ist, ohne dass der Kühlmittelpegel im Kühlmittelsumpf 30 zu sehr erhöht wird, was aufgrund von Planschen zu einer Schleppmomenterhöhung am Rotor führen kann, kann zum einen eine Überlauföffnung 36 in einem zur elektrischen Maschine benachbarten Scheibenelement zum Motor ausgebildet sein. Diese Öffnung 36 hat jedoch den Nachteil, dass der Kühlmitteldurchsatz im Sumpf 30 selber nicht ausreichend ist. Ein im Sumpf selbst angeordneter Auslass 38 dagegen ist meist aufgrund der baulichen Gegebenheiten nur sehr durchflussschwach.

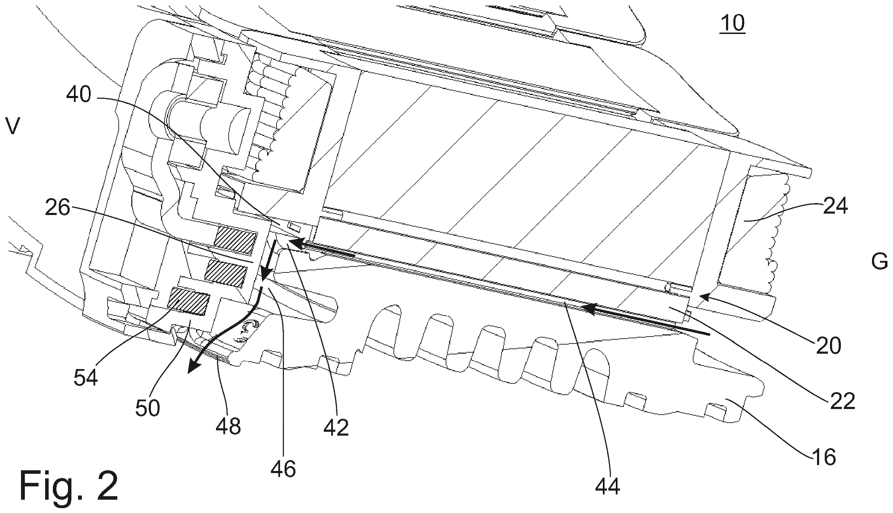

Insbesondere im Bereich des Statorträgers 16 kann Kühlmittel nur sehr schlecht abfließen. Grund dafür ist unter anderem, dass der Statorträger 16 axial auch das Blechpaket 20 mittels eines Schulterrands 40 abstützt, wie insbesondere Fig. 2 zu entnehmen ist.

Fig. 2 zeigt vergrößert den Stator 10 mit dem Statorträger 16 und dem daran angeordneten Blechpaket 20, an dem wiederum die Spulen 24 befestigt sind, wobei das Blechpaket 20 über den Schulterrand 40 abgestützt ist. Dieser Schulterrand 40 verhindert ohne die vorgeschlagenen baulichen Ausgestaltungen den freien Kühlmittelfluss durch den Stator 10. Es ist deshalb vorgeschlagen worden, an dem Schulterrand 40 des Statorträgers 16 eine Aussparung 42 auszubilden, über die Kühlmittel aus dem Stator 10 abfließen kann (siehe Pfeile in Fig. 1 und Fig. 2).

Weiterhin zeigt Fig. 2, dass der Statorzahn 22 des Blechpakets 20 eine Nut 44 aufweist, die üblicherweise den Zusammenbau des Blechpakets 20 vereinfacht, aber gleichzeitig, wie gezeigt, als Verbindungskanal für einen Kühlmittelaustausch von einer Getriebeseite G auf die Verbrennungsmotorseite V des Stators verwendbar ist. Ferner ist Fig. 2 zu entnehmen, dass die Nut 44 und die Aussparung 42 im Schulterrand 40 des Statorträgers 16 in fluidischem Kontakt zueinander stehen, so dass Kühlmittel direkt aus der Nut 44 über die Aussparung 42 nach radial außen geführt werden kann. Dazu ist weiterhin ein Kühlmittelablaufkanal 46 axial an dem Statorträger 16 angeordnet , der dadurch zwischen der Schaltringaufnahme 26 und dem Statorträger 16 ausreichend Platz schafft, um Kühlmittel nach radial außen zu einer Kühlmittelablauföffnung 48 und von dort aus in den Kühlmittelaufnahmeraum 34 führen zu können.

Wie insbesondere Fig. 1 gut zu entnehmen ist, würde eine andere Ausgestaltung zu einem deutlich engeren Durchflussbereich des Kühlmittels führen, so dass sich Kühlmittel im Kühlmittelsumpf 30 staut, wodurch kein ausreichender Kühlmitteldurchsatz für eine ausreichende Abwärmeabführung aus der elektrischen Maschine gewährleistet ist. Mit der erläuterten Ausgestaltung dagegen ist ein ausreichender Kühlmittelabtransport, insbesondere aus dem unteren Bereich des Stators möglich, wodurch der Kühlmitteldurchsatz selbst weiter erhöht werden kann.

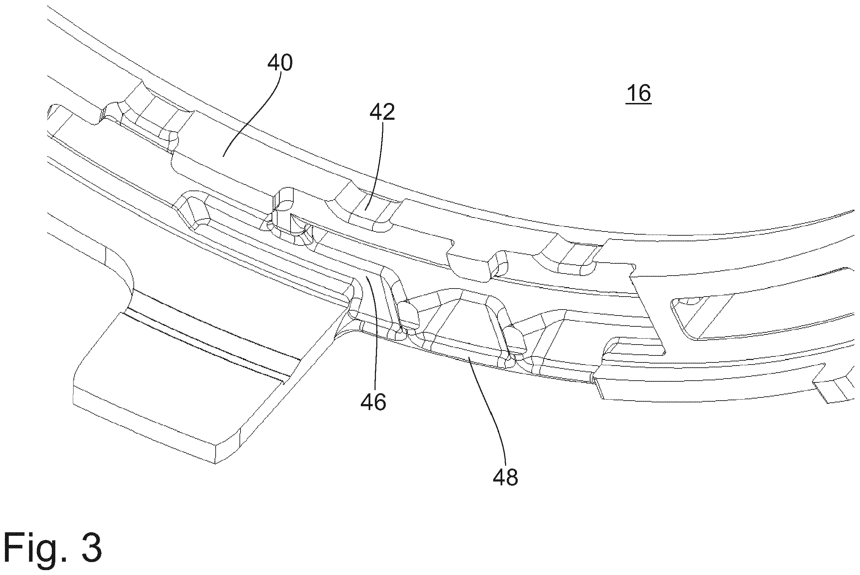

Fig. 3 zeigt eine räumliche Detailansicht des Statorträgers 16, aus der besonders gut hervorgeht, wie die im Schulterrand 40 ausgebildeten Aussparungen 42 in den Kühlmittelablaufkanal 46 und von dort aus in die Ablauföffnung 48 münden. Da üblicherweise die Schaltringaufnahme 26 direkt den Stator 10 kontaktiert, wäre gerade im unteren Bereich des Stators 10 ein Durchgang des Kühlmittels durch den Stator 10 ohne diese besonderen baulichen Ausgestaltungen blockiert bzw. äußerst eingeschränkt.

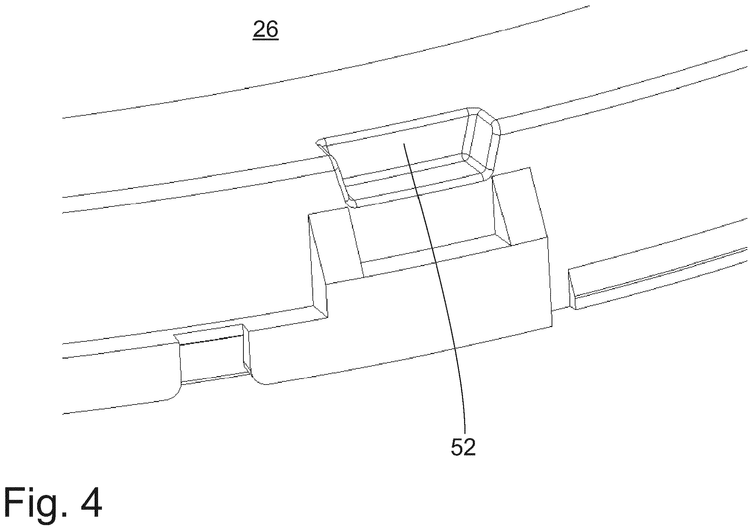

Aus diesem Grund kann gleichzeitig die Schaltringaufnahme 26 im Bereich der Aussparung 42 bzw. des Kühlmittelkanals 46 ebenfalls durchflussfreundlich gestaltet werden. Dazu zeigt Fig. 2 weiterhin, dass auch die Schaltringaufnahme 26 im Bereich der Aussparung 42 bzw. der Kühlmittelablauföffnung 48 baulich derart verändert sein kann, dass ein besonders guter Abfluss des Kühlmittels aus der elektrischen Maschine 1 möglich ist. Dazu weist die Schaltringaufnahme 26 zumindest in einem Teilbereich einen axialen Versatz 50 auf. Dieser Versatz 50 kann aber auch, wie genauer der Detailansicht von Fig. 4 zu entnehmen ist, als Einkerbung 52 ausgebildet sein. Alternativ kann der axiale Versatz 50 jedoch auch derart ausgebildet sein, dass der radial äußerste Schaltring 54 nicht nur im Bereich der Kühlmittelablauföffnung 48, sondern über die gesamte Schaltringaufnahme 26 nach axial außen versetzt angeordnet ist. Dieser axiale Versatz 50 bzw. die Einkerbung 52 an der Schaltringaufnahme 26 sorgen ebenfalls für eine verbesserte Kühlmittelabfuhr aus der elektrischen Maschine 1, was wiederum die Abfuhr der Wärme optimiert.

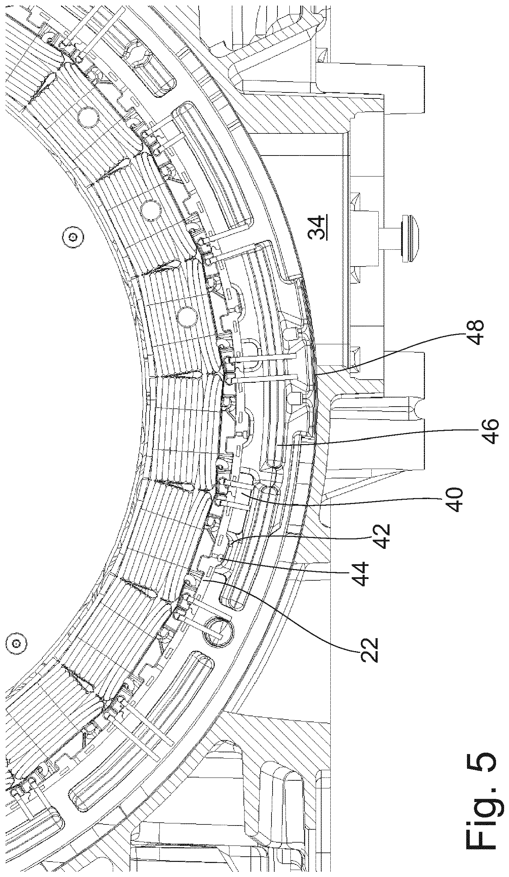

Fig. 5 zeigt eine Aufsicht auf den Stator 10 in axialer Richtung ohne Schaltringaufnahme 26. Dabei ist deutlich zu sehen, wie die Nut 44, die in dem Statorzahn 22 ausgebildet ist, in die Aussparungen 42 im Schulterbereich 40 des Statorträgers 16 münden. Gleichzeitig sieht man auch bei dieser Aufsicht wiederum, dass das aus den Nuten 44 tretende Kühlmittel über die Aussparungen 42 in den Kühlmittelablaufkanal 46 und von dort aus zur Ablauföffnung 48 und dem darunterliegenden Ölauffangbereich 34 geleitet wird.

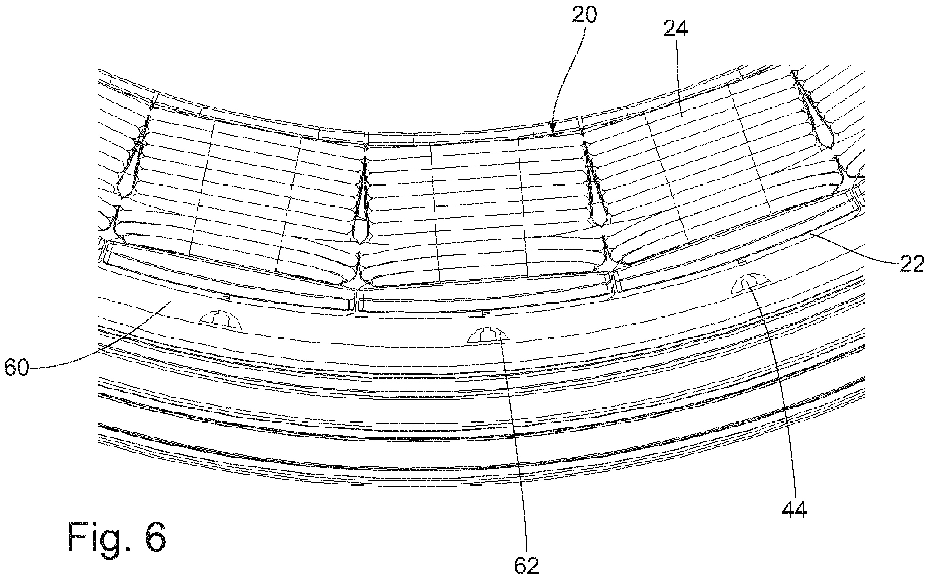

Die Durchflussmenge durch die Nuten 44 bzw. die Aussparungen 42 und den Kanal 46 kann zum einen über die Tiefe der Nut 44 gesteuert werden. Da die Nut 44 jedoch auch für eine Federung während eines Zusammenbaus des Blechpakets 20 verwendet wird, muss sie eine gewisse Tiefe aufweisen, um eine ausreichende Federwirkung bereitstellen zu können. Eine Steuerung oder Begrenzung der Durchflussmenge durch die Nut 44 kann deshalb beispielsweise über einen an der Schaltringaufnahme 26 gegenüberliegenden axialen Endseite des Stators 10 angebrachten Sicherungsring 60 definiert werden. Ein derartiger Sicherungsring 60 ist schematisch in Fig. 1 dargestellt und der detaillierten Aufsicht von Fig. 6 zu entnehmen.

Dabei zeigt Fig. 6 eine axiale Aufsicht auf den Stator von der Getriebeseite G her, wobei wiederum der Statorträger 16 und das Blechpaket 20, das aus separaten Statorsegmenten gefertigt ist, zu sehen sind. An den Statorzähnen 22 sind die in den Statorzähnen ausgebildeten Nuten 44 zu erkennen, durch die Kühlmittel auf die Verbrennungsmotorseite V strömen kann. Um eine axiale Sicherung des Blechpakets 20 am Statorträger 16 auch auf Getriebeseite G bereitzustellen, ist der Sicherungsring 60 vorgesehen, der zwischen Statorträger 16 und Blechpaket 20 verstemmt wird.

Wie Fig. 6 weiterhin zu entnehmen, weist der Sicherungsring 60 im Bereich der Nuten 44 Öffnungen 62 auf, die einen Kühlmitteldurchlass in die Nuten 44 ermöglichen, aber auch begrenzen. Dadurch kann über die Dimensionierung der Öffnungen 62 ein Einfluss auf die Durchflussmenge des Kühlmittels durch die Nuten 44 genommen werden. Dies ist insbesondere vorteilhaft, da bei einer veränderten Kühlmitteleintragsleistung im Kühlmittelkreislauf beispielsweise nur der Sicherungsring 60 ausgewechselt werden muss, um die Kühlmitteldurchflussmenge dementsprechend anzupassen.

Insgesamt ermöglicht die erfindungsgemäße Ausgestaltung des Stators bzw. der elektrischen Maschine einen verbesserten Kühlmittelablauf und damit einen verbesserten Wärmeaustrag aus der elektrischen Maschine, ohne die baulichen Gegebenheiten vergrößern zu müssen.

### Bezugszeichen

- 100: Hybridmodul
- 1: elektrische Maschine
- 2: Getriebeeingangswelle
- 4: Motorabtriebswelle
- 6: Rotornabe
- 8: Kupplungsvorrichtung
- 10: Stator
- 12: Rotor
- 14: Rotorträger
- 16: Statorträger
- 18: Gehäuse
- 20: Blechpaket
- 22: Statorzahn
- 24: Spule
- 26: Schaltringaufnahme
- 30: Kühlmittelsumpf
- 32: Luftspalt
- 34: Kühlmittelsammelraum
- 36: Überlauföffnung
- 38: Kühlmittelauslass
- 40: Schulterrand des Statorträgers
- 42: Aussparung in der Schulter
- 44: axiale Nut
- 46: Kühlmittelablaufkanal
- 48: Kühlmittelablauföffnung
- 50: axialer Versatz
- 52: Einkerbung
- 54: radial äußerer Schaltring
- 60: Sicherungsring
- 62: Öffnung im Sicherungsring
- G: Getriebeseite
- V: Verbrennungsmotorseite

## Patentansprüche

1. Stator (10) einer elektrischen Maschine (1), insbesondere für ein Hybrid- oder Elektrofahrzeug, wobei der Stator (10) einen im Wesentlichen zylindermantelförmigen sich axial erstreckenden Statorträger (16) umfasst und wobei der Statorträger (16) ein Blechpaket (20) mit einer Vielzahl von im Wesentlichen ringförmig angeordneten Statorzähnen (22) trägt und einen sich nach radial innen erstreckenden Schulterrand (40) aufweist, der als axiale Abstützung für das Blechpaket (20) dient, wobei in einem unteren Bereich des Stators (10) zwischen dem Statorträger (16) und dem Blechpaket (20) ein sich axial erstreckender Fluidkanal ausgebildet ist, um Kühlmittel von einer axialen Seite des Stators (10) auf die andere axiale Seite des Stators (10) zu transportieren und wobei im Bereich des Fluidkanals an dem Schulterrand (40) des Statorträgers (16) mindestens eine Aussparung (42) ausgebildet ist,
**dadurch gekennzeichnet, dass**
der Fluidkanal als eine im Wesentlichen axial verlaufende Nut (44) an einem Statorzahn (22) ausgebildet ist, wobei die Aussparung (42) an dem Schulterrand (40) des Statorträgers (16) im Bereich der Nut (44) angeordnet ist und wobei der Statorträger (16) zumindest im Bereich der Aussparung (42) einen bezüglich des Blechpakets (20) axial außen angeordneten, sich zumindest teilweise nach radial außen erstreckenden Ablaufkanal (46) aufweist, der in fluidischem Kontakt mit der Aussparung (42) ausgebildet ist.

2. Stator (10) nach Anspruch 1, wobei das Blechpaket (20) als einzelne im Wesentlichen ringförmig angeordnete Statorsegmente ausgebildet ist, wobei an jedem Statorsegment ein oder mehrere Statorzähne (22) ausgebildet sind, oder das Blechpaket (20) als integrales Bauteil ausgebildet ist.

3. Stator (10) nach einem der vorhergehenden Ansprüche, wobei an dem Statorträger (16) in einem unteren Bereich an seinem radial äußeren Rand eine Ablauföffnung (48) ausgebildet ist.

4. Stator (10) nach Anspruch 3, wobei der Ablaufkanal (46) einerseits mit zumindest einer der Aussparungen (42) an dem Schulterrand (40) des Statorträgers (16) und andererseits mit der Ablauföffnung (48) am radial äußeren unteren Rand des Statorträgers (16) fluidisch verbunden ist.

5. Stator (10) nach einem der vorhergehenden Ansprüche, wobei an dem Stator (10) weiterhin eine Schaltringaufnahme (26) angeordnet ist, die radial außen im Bereich des Schulterrands (40) des Statorträgers (16) mindestens einen vom Stator (10) nach axial außen versetzten Teilbereich (50; 52) aufweist, wobei vorzugsweise der Teilbereich als Einkerbung (52) ausgebildet ist.

6. Stator (10) nach Anspruch 5, wobei der mindestens eine Teilbereich (50; 52) im Bereich der im Wesentlichen axial verlaufenden Nut (44) des Statorzahns (22) angeordnet ist.

7. Stator (10) nach Anspruch 5 oder 6, wobei die Schaltringaufnahme (26) mindestens drei radial übereinanderliegende Schaltringaufnahmetaschen aufweist, wobei die radial äußerste Schaltringaufnahmetasche vom Stator (10) nach axial außen versetzt angeordnet ist.

8. Stator (10) nach einem der Ansprüche 1 bis 7, wobei zur axialen Sicherung des Blechpakets (20) an der dem Schulterrand (40) abgewandten Seite des Statorträgers (16) ein Sicherungsring (60) vorgesehen ist, der mindestens eine Öffnung (62) aufweist, die vorzugsweise im Bereich der im Wesentlichen axial angeordneten Nut (44) des Statorzahns (22) angeordnet ist.

9. Elektrische Maschine (1), insbesondere für ein Hybridfahrzeug oder ein Elektrofahrzeug, umfassend einen nach einem der vorhergehenden Ansprüche ausgebildeten Stator (10) und einen Rotor (12), die in einem Gehäuse (18) aufgenommen sind, wobei der Statorträger (16) drehfest mit dem Gehäuse (18) verbunden ist.

10. Elektrische Maschine (1) nach Anspruch 9, wobei in einem unteren Bereich des Gehäuses (18) eine Sumpfwanne (30) für ein dort aufgenommenes Kühlmittel ausgebildet ist und der Stator (10), vorzugsweise in seinem unteren Bereich, zumindest teilweise von dem Kühlmittel umgeben ist.

11. Elektrische Maschine (1) nach Anspruch 10, wobei die Aussparung (42) im Schulterrand (40) des Statorträgers (16) und/oder die im Wesentlichen axial angeordnete Nut (44) des Statorzahns (22) und/oder der axial nach außen versetzte Teilbereich (50; 52) der Schaltringaufnahme (26) im Bereich der Sumpfwanne (30) ausgebildet sind.

12. Elektrische Maschine (1) nach einem der Ansprüche 9 bis 11, wobei die Aussparung (42) im Schulterrand (40) des Statorträgers (16), die im Wesentlichen axial angeordneten Nut (44) des Statorzahns (22) und optional die Öffnung (62) im Sicherungsring (60) einen fluidischen Verbindungskanal für das Kühlmittel durch den Stator (10) bereitstellen.

13. Elektrische Maschine (1) nach Anspruch 12, wobei die Öffnung (62) im Sicherungsring (60) derart dimensioniert ist, dass über ihre Dimensionierung eine Durchflussmenge des Kühlmittels durch den Stator (10) definierbar ist.

14. Elektrische Maschine (1) nach einem der Ansprüche 9 bis 13, wobei weiterhin an dem Gehäuse (18), insbesondere im Bereich des Blechpakets (20), mindestens eine Kühlmitteleintragsstelle, insbesondere eine Kühlmittelsprühdüse, vorgesehen ist, die Kühlmittel an eine am Statorzahn (22) angeordnete Spule (24) und/oder in einen zwischen dem Stator (10) und dem Rotor (12) der elektrischen Maschine (1) ausgebildeten Spalt (32) einbringt.

15. Elektrische Maschine (1) nach einem der Ansprüche 9 bis 14, wobei an einer tiefsten Stelle des Gehäuses (18) ein Kühlmittelauslass vorgesehen ist, der vorzugsweise mit der Ablauföffnung (48) am Statorträger (16) in fluidischem Kontakt steht.

## Claims

1. Stator (10) of an electric machine (1), in particular for a hybrid or electric vehicle, the stator (10) comprising a substantially cylinder shell-shaped, axially extending stator carrier (16), and the stator carrier (16) carrying a laminated core (20) with a multiplicity of substantially annularly arranged stator teeth (22), and having a radially inwardly extending shoulder edge (40) which serves as an axial support for the laminated core (20), an axially extending fluid duct being configured in a lower region of the stator (10) between the stator carrier (16) and the laminated core (20), in order to transport coolant from one axial side of the stator (10) to the other axial side of the stator (10), and at least one cut-out (42) being configured in the region of the fluid duct on the shoulder edge (40) of the stator carrier (16), **characterized in that** the fluid duct is configured as a substantially axially running groove (44) on a stator tooth (22), the cut-out (42) being arranged on the shoulder edge (40) of the stator carrier (16) in the region of the groove (44), and the stator carrier (16) having an outflow duct (46) at least in the region of the cut-out (42), which outflow duct (46) is arranged axially on the outside with regard to the laminated core (20), extends at least partially radially to the outside, and is configured in fluidic contact with the cut-out (42).

2. Stator (10) according to Claim 1, the laminated core (20) being configured as individual substantially annularly arranged stator segments, one or more stator teeth (22) being configured on each stator segment, or the laminated core (20) being configured as an integral component.

3. Stator (10) according to either of the preceding claims, an outflow opening (48) being configured on the stator carrier (16) in a lower region on its radially outer edge.

4. Stator (10) according to Claim 3, the outflow duct (46) being connected fluidically on one side to at least one of the cut-outs (42) on the shoulder edge (40) of the stator carrier (16) and on the other side to the outflow opening (48) on the radially outer lower edge of the stator carrier (16).

5. Stator (10) according to one of the preceding claims, a control ring holder (26) being arranged, furthermore, on the stator (10), which control ring holder (26) has at least one part region (50; 52) which is offset axially to the outside from the stator (10) radially on the outside in the region of the shoulder edge (40) of the stator carrier (16), the part region preferably being configured as a notch (52).

6. Stator (10) according to Claim 5, the at least one part region (50; 52) being arranged in the region of the substantially axially running groove (44) of the stator tooth (22).

7. Stator (10) according to Claim 5 or 6, the control ring holder (26) having at least three control ring holder pockets which lie radially above one another, the radially outermost control ring holder pocket being arranged offset axially to the outside from the stator (10) .

8. Stator (10) according to one of Claims 1 to 7, a securing ring (60) being provided for axial securing of the laminated core (20) on that side of the stator carrier (16) which faces away from the shoulder edge (40), which securing ring (60) has at least one opening (62) which is preferably arranged in the region of the substantially axially arranged groove (44) of the stator tooth (22).

9. Electric machine (1), in particular for a hybrid vehicle or an electric vehicle, comprising a stator (10) which is configured according to one of the preceding claims and a rotor (12), which stator (10) and rotor (12) are received in a housing (18), the stator carrier (16) being connected fixedly to the housing (18) so as to rotate with it.

10. Electric machine (1) according to Claim 9, a sump pan (30) being configured in a lower region of the housing (18) for a coolant which is received there, and the stator (10) being surrounded at least partially by the coolant, preferably in its lower region.

11. Electric machine (1) according to Claim 10, the cut-out (42) in the shoulder edge (40) of the stator carrier (16) and/or the substantially axially arranged groove (44) of the stator tooth (22) and/or that part region (50; 52) of the control ring holder (26) which is offset axially to the outside being configured in the region of the sump pan (30).

12. Electric machine (1) according to one of Claims 9 to 11, the cut-out (42) in the shoulder edge (40) of the stator carrier (16), that groove (44) of the stator tooth (22) which is arranged substantially axially, and optionally the opening (62) in the securing ring (60) providing a fluidic connecting duct for the coolant through the stator (10).

13. Electric machine (1) according to Claim 12, the opening (62) in the securing ring (60) being dimensioned in such a way that a throughflow quantity of the coolant through the stator (10) can be defined via its dimensioning.

14. Electric machine (1) according to one of Claims 9 to 13, at least one coolant inlet point, in particular one coolant spray nozzle, being provided, furthermore, on the housing (18), in particular in the region of the laminated core (20), which coolant inlet point introduces coolant onto a coil (24) which is arranged on the stator tooth (22) and/or into a gap (32) which is configured between the stator (10) and the rotor (12) of the electric machine (1).

15. Electric machine (1) according to one of Claims 9 to 14, a coolant outlet being provided at the deepest point of the housing (18), which coolant outlet is preferably in fluidic contact with the outflow opening (48) on the stator carrier (16).

## Revendications

1. Stator (10) d'une machine électrique (1), en particulier pour un véhicule hybride ou électrique, le stator (10) comprenant un support de stator (16) substantiellement en forme d'enveloppe cylindrique s'étendant axialement, et le support de stator (16) présentant un empilage de tôles (20) doté d'une pluralité de dents de stator (22) disposées de manière substantiellement annulaire, et un bord d'épaulement (40) s'étendant radialement vers l'intérieur qui sert d'appui à l'empilage de tôles (20), dans lequel, dans une zone inférieure du stator (10), entre le support de stator (16) et l'empilage de tôles (20), un canal de fluide s'étendant axialement est réalisé pour transporter un liquide de refroidissement d'un côté axial du stator (10) à l'autre côté axial du stator (10), et dans lequel, au niveau du canal de fluide, au moins un évidement (42) est réalisé sur le bord d'épaulement (40) du support de stator (16),
**caractérisé en ce que** le canal de fluide est réalisé sous la forme d'une rainure (44) s'étendant de manière substantiellement axiale sur une dent de stator (22), l'évidement (42) étant disposé sur le bord d'épaulement (40) du support de stator (16) au niveau de la rainure (44), et le support de stator (16) présentant au moins au niveau de l'évidement (42) un canal d'écoulement (46) disposé axialement à l'extérieur par rapport à l'empilage de tôles (20) et s'étendant au moins partiellement radialement vers l'extérieur, lequel canal d'écoulement est réalisé en contact fluidique avec l'évidement (42).

2. Stator (10) selon la revendication 1, dans lequel l'empilage de tôles (20) est réalisé sous la forme de segments de stator individuels, disposés de manière substantiellement annulaire, une ou plusieurs dents de stator (22) étant réalisée(s) sur chaque segment de stator, ou l'empilage de tôles (20) étant réalisé sous la forme d'un composant d'un seul tenant.

3. Stator (10) selon l'une quelconque des revendications précédentes, dans lequel une ouverture d'écoulement (48) est réalisée sur le support de stator (16) dans une zone inférieure sur son bord radialement extérieur.

4. Stator (10) selon la revendication 3, dans lequel le canal d'écoulement (46) est relié fluidiquement d'une part à au moins l'un des évidements (42) sur le bord d'épaulement (40) du support de stator (16), et d'autre part à l'ouverture d'écoulement (48) sur le bord inférieur radialement extérieur du support de stator (16) .

5. Stator (10) selon l'une quelconque des revendications précédentes, dans lequel, sur le stator (10) est disposé en outre un logement de bague de commutation (26) qui présente radialement à l'extérieur au niveau du bord d'épaulement (40) du support de stator (16) au moins une zone partielle (50 ; 52) décalée axialement vers l'extérieur par rapport au stator (10), la zone partielle étant de préférence réalisée sous forme d'encoche (52).

6. Stator (10) selon la revendication 5, dans lequel ladite au moins une zone partielle (50 ; 52) est disposée au niveau de la rainure (44), s'étendant de manière substantiellement axiale, de la dent de stator (22).

7. Stator (10) selon la revendication 5 ou 6, dans lequel le logement de bague de commutation (26) présente au moins trois poches de logement de bague de commutation radialement superposées, la poche de logement de bague de commutation radialement la plus à l'extérieur est disposée de manière décalée axialement vers l'extérieur par rapport au stator (10).

8. Stator (10) selon l'une quelconque des revendications 1 à 7, dans lequel, pour le blocage axial de l'empilage de tôles (20) sur le côté, détourné du bord d'épaulement (40), du support de stator (16), une bague de blocage (60) est prévue qui présente au moins une ouverture (62) qui est disposée de préférence au niveau de la rainure (44), disposée de manière substantiellement axiale, de la dent de stator (22).

9. Machine électrique (1), en particulier pour un véhicule hybride ou un véhicule électrique, comprenant un stator (10) réalisé selon l'une quelconque des revendications précédentes et un rotor (12) qui sont reçus dans un carter (18), le support de stator (16) étant relié au carter (18) de manière verrouillée en rotation.

10. Machine électrique (1) selon la revendication 9, dans laquelle, dans une zone inférieure du carter (18), un réservoir de carter (30) est réalisé pour le liquide de refroidissement reçu dans celui-ci, et le stator (10), de préférence dans sa zone inférieure, est entouré au moins partiellement par le liquide de refroidissement.

11. Machine électrique (1) selon la revendication 10, dans laquelle l'évidement (42) est réalisé dans le bord d'épaulement (40) du support de stator (16), et/ou la rainure (44), disposée de manière substantiellement axiale, de la dent de stator (22) et/ou la zone partielle (50 ; 52), décalée axialement vers l'extérieur, du logement de bague de commutation (26) sont réalisées au niveau du réservoir de carter (30).

12. Machine électrique (1) selon l'une quelconque des revendications 9 à 11, dans laquelle l'évidement (42) dans le bord d'épaulement (40) du support de stator (16), la rainure (44), disposée de manière substantiellement axiale, de la dent de stator (22), et en option l'ouverture (62) dans la bague de blocage (60) fournissent un canal de liaison fluidique pour le liquide de refroidissement à travers le stator (10).

13. Machine électrique (1) selon la revendication 12, dans laquelle l'ouverture (62) dans la bague de blocage (60) est dimensionnée de telle sorte que son dimensionnement permet de définir un débit du liquide de refroidissement à travers le stator (10).

14. Machine électrique (1) selon l'une quelconque des revendications 9 à 13, dans laquelle en outre sur le carter (18), en particulier au niveau de l'empilage de tôles (20), au moins un point d'introduction de liquide de refroidissement, en particulier une buse de pulvérisation de liquide de refroidissement, est prévu, qui introduit un liquide de refroidissement sur une bobine (24) disposée sur la dent de stator (22) et/ou dans un interstice (32) réalisé entre le stator (10) et le rotor (12) de la machine électrique (1).

15. Machine électrique (1) selon l'une quelconque des revendications 9 à 14, dans laquelle, à un point le plus bas du carter (18), une sortie de liquide de refroidissement est prévue qui est de préférence en contact fluidique avec l'ouverture d'écoulement (48) sur le support de stator (16) .
